Europäisches Patentamt

European Patent Office

Office européen des brevets

(11) Veröffentlichungsnummer: **0 114 212**
**A2**

## EUROPÄISCHE PATENTANMELDUNG

(21) Anmeldenummer: 83110989.7

(22) Anmeldetag: 03.11.83

(51) Int. Cl.³: **B 29 D 23/04**

(30) Priorität: 28.12.82 DE 3248479

(43) Veröffentlichungstag der Anmeldung:
01.08.84 Patentblatt 84/31

(84) Benannte Vertragsstaaten:
AT BE CH DE FR GB IT LI LU NL SE

(71) Anmelder: FORMEX Gesellschaft für Kunststofformung mbH
Klosterweg 12
D-8090 Wasserburg am Inn(DE)

(72) Erfinder: Alber, Tassilo, Freih. von Glanstätten
Klosterweg 12
D-8090 Wasserburg am Inn(DE)

(74) Vertreter: Barz, Peter, Dr. et al,
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40(DE)

(54) Verfahren und Vorrichtung zur Herstellung von flexiblen Kunststoffschläuchen.

(57) Flexible Kunststoffschläuche werden dadurch hergestellt, daß man ein oder mehrere Kunststoffmaterialien zu einem Rohr extrudiert, das Rohr in noch plastischem Zustand entlang seines Innen- und/oder Außenumfangs mit einer Schnittiefe, die geringer ist als die Rohrdicke, spiralförmig einschneidet und den erhaltenen flexiblen Schlauch gegebenenfalls streckt. Die Vorrichtung zur Durchführung dieses Verfahrens umfaßt mindestens einen Extruder, einen Spritzkopf und eine drehbare Schneideinrichtung unmittelbar am Düsenaustritt des Spritzkopfes.

*Fig.1*

Croydon Printing Company Ltd.

EP 0 114 212 A2

- 1 -

## Verfahren und Vorrichtung zur Herstellung von flexiblen Kunststoffschläuchen

Flexible Schläuche, insbesondere Saug- und Lüftungsschläuche, werden zum großen Teil aus profilierten Bändern gewickelt, die dann miteinander verschweißt oder verklebt werden; siehe z.B. DE-OS 27 11 237, 27 17 212, 31 26 262 und 31 27 072 sowie EP-A-80 303 626.

Ein anderes Verfahren geht aus von glattextrudierten Schläuchen, die in beweglichen Formen zu Wellschläuchen geformt werden; siehe z.B. EP-A-79 102 491.

Ein weiteres Verfahren zur Herstellung derartiger Schläuche besteht darin, die Wendel auf vorgefertigte Schlauchseelen aufzuwickeln und diese durch Schweißen oder durch Kleben zu verbinden bzw. die Wendel vorzuwickeln und diese mit einem elastischen Mantel zu umhüllen; siehe z.B. DE-PS 27 00 056 und DE-OS 28 04 251. Dabei kann der Mantel schlauchförmig axial aufextrudiert werden bzw. aus gewickelten und verbundenen Bändern bestehen; siehe DE-AS 22 47 554.

Die vorstehend genannten bekannten Verfahren erfordern schwierige und zum Teil sehr aufwendige Wickelvorgänge. Teilweise muß mit Produktionshilfsdornen gearbeitet werden, die abgesehen vom hohen Fertigungsaufwand auch keine Endlosfertigung ermöglichen. Die geschweißten Schläuche erfordern einen hohen Energieaufwand bei der Schweißung und die Schweißnaht stellt im Hinblick auf die Festigkeit stets eine Schwachstelle dar. Die beweglichen Formen zur Herstellung von Wickelschläuchen sind sehr teuer und können naturgemäß nur für ein bestimmtes Schlauchmaß eingesetzt werden.

- 2 -

Ziel der Erfindung ist es daher, ein Verfahren und eine
Vorrichtung zur Herstellung von flexiblen Kunststoffschläuchen bereitzustellen, die mit geringstmöglichen
Betriebs- und Investitionskosten sowie optimaler Energieausnutzung arbeiten und leicht auf unterschiedliche
Schlauchtypen und -maße einstellbar sind.

Gegenstand der Erfindung ist ein Verfahren zur Herstellung von flexiblen Kunststoffschläuchen, das dadurch
gekennzeichnet ist, daß man ein Kunststoffmaterial zu
einem Rohr extrudiert, das Rohr in noch plastischem
Zustand entlang seines Innen- und/oder Außenumfangs
mit einer Schnittiefe, die geringer ist als die Rohrdicke, spiralförmig einschneidet und den erhaltenen
flexiblen Schlauch gegebenenfalls streckt.

Gegenstand der Erfindung ist ferner eine Vorrichtung zur
Durchführung des Verfahrens, die gekennzeichnet ist
durch mindestens einen Extruder, einen Spritzkopf und
eine drehbare Schneideinrichtung unmittelbar am Düsenaustritt des Spritzkopfes. Falls der geschnittene
Schlauch noch gestreckt werden soll, weist die Vorrichtung zusätzlich eine geeignete Streckeinrichtung auf.

In einer Ausführungsform des erfindungsgemäßen Verfahrens
wird ein einziges Kunststoffmaterial extrudiert und
dann entlang seines Innen- und/oder Außenumfangs spiralförmig eingeschnitten. Werden sowohl der Innenumfang als
auch der Außenumfang des extrudierten Rohrs eingeschnitten, so sind im allgemeinen die Schnitte gegeneinander versetzt.

Die Schneidvorrichtung wird vorzugsweise durch einen
stufenlos regelbaren Antrieb angetrieben. Somit kann

- 3 -

die Wendelbreite des Schlauches einfach durch Änderung der Antriebsdrehzahl der Schneidvorrichtung beliebig eingestellt werden. Bei konstantem Ausstoß aus dem Spritzkopf bedeutet eine niedrige Schneidedrehzahl eine breite Wendel, während eine hohe Drehzahl eine schmale Wendel ergibt. Die Breite der Wendel bestimmt maßgebend die Schlaucheigenschaften; sie ist direkt proportional zur radialen Festigkeit des Schlauches und indirekt proportional zu seiner Flexibilität.

Zur Erhöhung der Wirtschaftlichkeit kann auch ein Mehrfachschnitt entlang des Innen- und/oder Außenumfangs durchgeführt werden, wobei Schläuche mit mehrgängiger Wendelung erhalten werden. Die Schneidvorrichtung weist bei dieser Ausführungsform jeweils zwei oder mehr Schneidelemente für den Innen- oder Außenschnitt auf, so daß mit gleicher Drehzahl die doppelte oder mehrfache Zahl von Radialschnitten erzielt wird.

Um bei den Schläuchen das Anbringen von Anschlüssen zu erleichtern, kann im erfindungsgemäßen Verfahren der Schneidvorgang gezielt ausgesetzt bzw. wieder aufgenommen werden. Dadurch besteht die Möglichkeit, alternierend ohne zusätzliche Arbeitsgänge vollwandige Schlauchbereiche zu schaffen, die beispielsweise für die Anbringung von Anschlüssen besser geeignet sind als der gewendelte Schlauch mit seiner welligen Oberfläche. Auf diese Weise lassen sich auch z.B. Kniestücke, Winkel oder sonstige flexible Abschnitte für starre Rohrleitungen schaffen, die mit Hilfe ihrer vollwandigen Bereiche problemlos ineinandergesteckt oder auf sonstige Weise verbunden werden können.

In einer anderen Ausführungsform des erfindungsgemäßen Verfahrens werden zwei oder mehr Kunststoffmaterialien

0114212

von verschiedener Härte koextrudiert, worauf man das extrudierte Rohr entlang seines Innen- und/oder Außenumfangs spiralförmig einschneidet. Für den Schneidvorgang gilt das oben Gesagte. Vorzugsweise schneidet man jedoch bei dieser Ausführungsform die jeweils härtere Materialschicht des extrudierten Rohrs in ihrer gesamten Dicke, während die jeweils weichere Materialschicht nicht oder kaum eingeschnitten wird. Die aus mehrschichtigen, koextrudierten Rohren hergestellten Schläuche, deren harte Schicht eingeschnitten ist, besitzen durch die Koextrusion eine absolute Bindung zwischen den Materialien, z.B. der harten, geschnittenen Wendel und der weichen Innenkomponente, ohne daß zusätzliche Hilfsmittel oder Manipulationen (Verschweißen, Verkleben, etc.) erforderlich sind.

In einer bevorzugten Ausführungsform des erfindungsgemäßen Verfahrens werden die eingeschnittenen Schläuche unmittelbar nach dem Schneiden zwecks Längung des nicht durchgeschnittenen Bereiches gestreckt. Die Höhe der Streckung, die vorzugsweise zwischen 10 und 200 % liegt, bestimmt maßgeblich die Eigenschaften des gewünschten Produktes und kann einfach durch Änderung der Abzugsgeschwindigkeit des Schlauches beliebig eingestellt werden. Es sind mit anderen Worten beliebige Steigungen der Schlauchwendel möglich.

Bei geringer Verstreckung erhält man schwere Schlauchausführungen mit einer Restwandstärke im eingeschnittenen Bereich bis zu mehreren Millimetern. Bei hoher Verstreckung kann die restliche Wandstärke im Schnittbereich bis auf 1/10 mm und mehr gezogen werden, wobei äußerst flexible und leichte Schläuche entstehen, die nach herkömmlichen Verfahren kaum herstellbar sind.

Da der fertige Schlauch im erfindungsgemäßen Verfahren nicht um seine eigene Achse rotiert, bedarf es nur einer einfachen Aufspulung, so daß sich teure Wickelstationen erübrigen. Da außerdem keine Schweiß- oder Klebestationen erforderlich sind, ergeben sich sehr kompakte Fertigungsanlagen mit minimalem Platzbedarf. Auch die Energieausnutzung ist optimal, da das Produkt nach dem Extrudieren in noch plastischem Zustand verarbeitet wird, so daß keine zusätzliche Energie zur Verschweißung oder Klebung der Schlauchaufbauten benötigt wird. Erst das fertige Produkt wird abgekühlt.

Ein weiterer Vorteil des erfindungsgemäßen Verfahrens ist die leichte Anpassung an unterschiedliche Schlauchdurchmesser. Das Umrüsten für verschiedene Durchmesser erfolgt vorteilhafterweise in Bereichen bis zu 40 mm durch bloße Änderung jeweils eines Düsensatzes und Verstellen der Schneidvorrichtung, z.B. von 5 bis 45 mm oder von 50 bis 90 mm, etc. Eine Durchmesseränderung kann auch durch einfaches Blähen des geschnittenen, noch plastischen Schlauches bzw. durch Unterdruck von innen oder Überdruck von außen erfolgen.

Erfindungsgemäß lassen sich Schläuche selbst bei sehr geringen Wendelbreiten und Steigungen der Wendel äußerst wirtschaftlich herstellen, da hohe Schneidgeschwindigkeiten gut beherrschbar sind. Es sind somit Schläuche herstellbar, die selbst schnittseitig aufgrund ihrer dicht aneinanderliegenden Windungen glatt sind und vorzügliche Flexibilität aufweisen. Dies ist ein wesentlicher Vorteil gegenüber Schläuchen mit gewellter Oberfläche.

0114212

Eine Wellung der inneren Schlauchfläche beeinträchtigt nämlich die Strömung des durchfließenden Mediums, und auch die Wellung der äußeren Schlauchfläche ist in manchen Fällen unerwünscht.

Die nach dem erfindungsgemäßen Verfahren hergestellten Schläuche können gegebenenfalls durch weitere Ein- oder Aufbauten für spezielle Anwendungsgebiete ausgestaltet werden. So kann beispielsweise in einen außen geschnittenen Schlauch noch im selben Arbeitsgang durch den mittleren Durchlaß des Extrusionswerkzeuges eine weitere vorgefertigte Schlauchseele eingeführt werden, die zusätzlich axial und/oder radial bewehrt sein kann. Hierdurch erhält man druckbeständige Schläuche mit hoher radialer Steifigkeit. Es ist auch möglich, auf einen erfindungsgemäß hergestellten Schlauch eine glatte Umhüllung außen aufzuextrudieren.

Für das erfindungsgemäße Verfahren eignen sich grundsätzlich alle extrudierbaren Kunststoffe der plastomeren, elastomeren und duromeren Gattung, die aufgrund ihres rheologischen Verhaltens den Schneidvorgang ermöglichen.

Für homoextrudierte Schläuche sind Kunststoffe der genannten Gattungen besonders bevorzugt, die in plastischem bzw. anvernetztem Zustand eine mittlere bis hohe Schmelzviskosität und Schmelzstabilität besitzen. Für die koextrudierten Schläuche gilt für die harte Komponente das gleiche, während die weiche Komponente mehr nach ihrer Affinität zur härteren Komponente ausgewählt wird als nach ihrem rheologischen Verhalten. Als weiche Komponenten können auch leichtfließende Materialien eingesetzt werden.

Für die Homoextrusion besonders geeignet sind z.B. mittelharte PVC-Typen mit einer Shore-A-Härte von ca. 90 und schwerfließendes Polyethylen von niederer oder hoher Dichte mit einem Schmelzindex von ca. 3. Für die Koextrusion eignen sich z.B. vorzüglich Hart-PVC für die harte, zu schneidende Schicht in Verbindung mit Weich-PVC mit einer Shore-A-Härte von ca. 70 bis 80 . Ebenfalls geeignet ist die Kombination von schwerfließenden Polyolefinen, z.B. Polypropylen oder Polyethylen von niederer oder hoher Dichte (Schmelzindex < 5) für die härtere, zu schneidende Schicht und z.B. Ethylen-Vinylacetat-Copolymeren für die weiche, ungeschnittene Schicht.

In allen Fällen kann das Fließverhalten der Materialien zusätzlich z.B. über die Temperaturführung und/oder durch Zugabe von geeigneten organischen oder anorganischen Füllstoffen sowie die Rezeptierung der Rohstoffe beeinflußt werden.

Im folgenden wird die Erfindung anhand bevorzugter Ausführungsformen unter Bezug auf die Zeichnung näher erläutert.

Es zeigen:

Fig. 1 - Eine Draufsicht auf eine bevorzugte Ausführungsform einer Anlage zur Herstellung homoextrudierter Schläuche;

Fig. 2 - eine Draufsicht auf eine bevorzugte Ausführungsform einer Anlage zur Herstellung koextrudierter Schläuche;

Fig. 3a  -  eine Vorderansicht eines Querspritzkopfes,
der in der Vorrichtung von Fig. 1  zur Herstellung von innen und außen geschnittenen,
homoextrudierten Schläuchen verwendbar ist;

Fig. 3b  -  eine Draufsicht auf den Querspritzkopf von
Fig. 3a ;

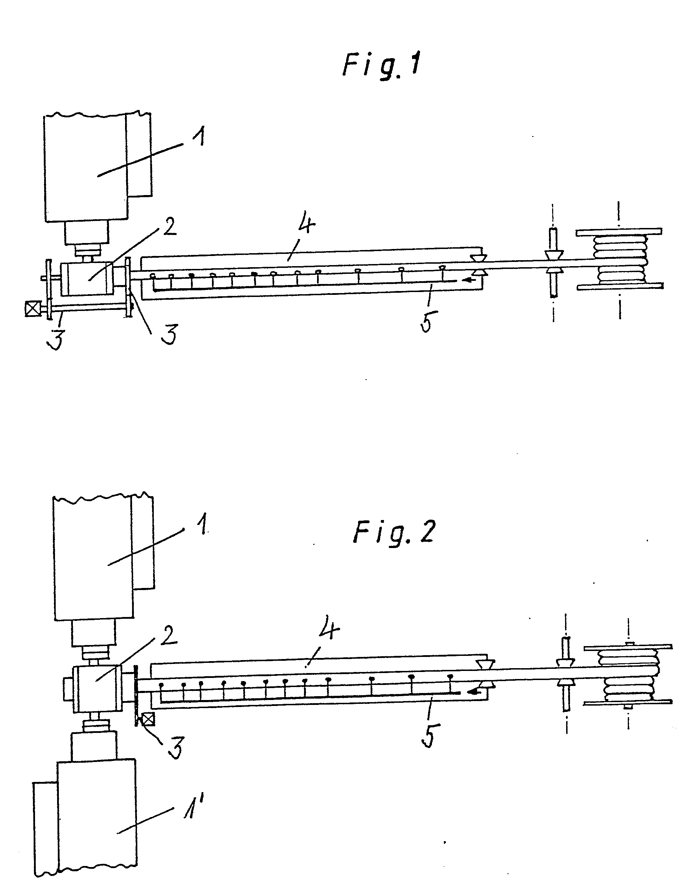

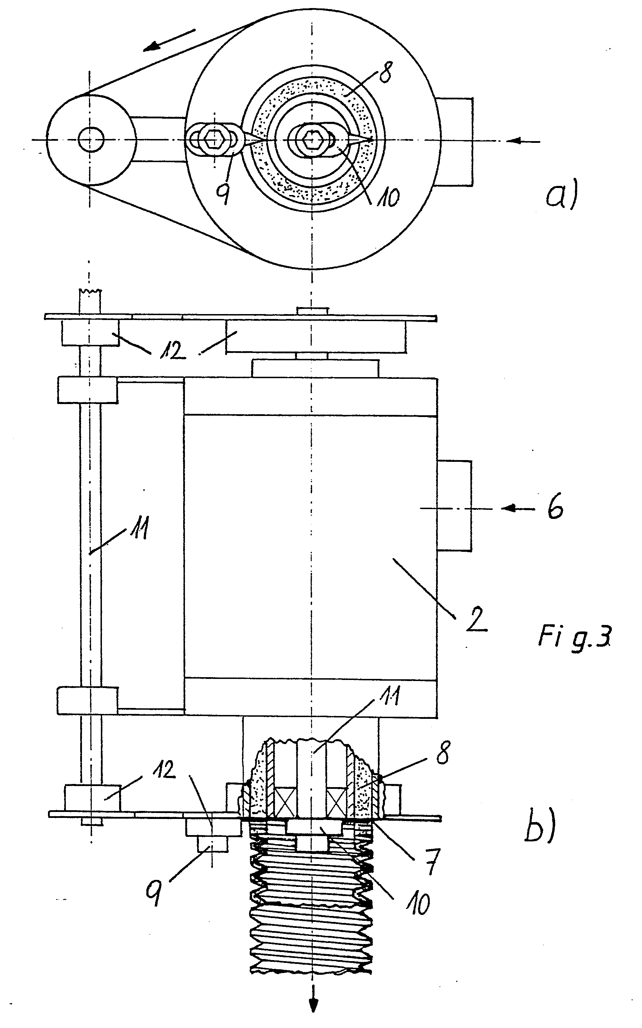

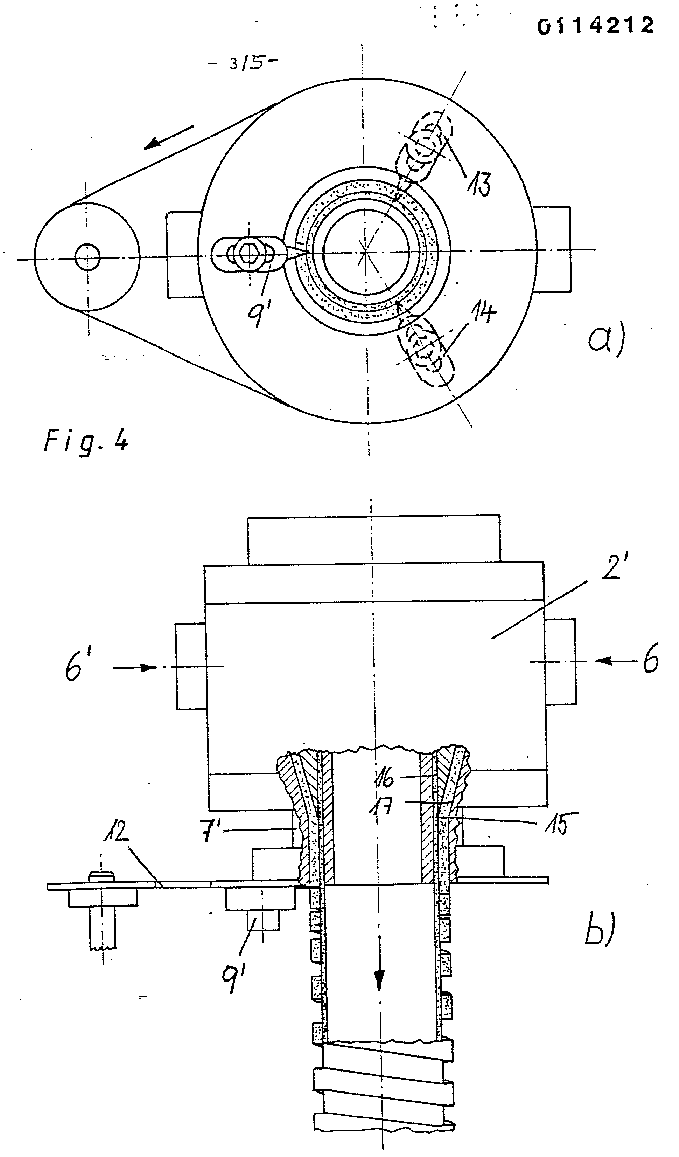

Fig. 4a  -  eine Vorderansicht eines Koextrusionskopfes,
der in der Vorrichtung von Fig. 2  zur Herstellung von außen geschnittenen, koextrudierten Schläuchen verwendbar ist;

Fig. 4b  -  Eine Draufsicht auf den Koextrusionskopf von
Fig. 4a ;

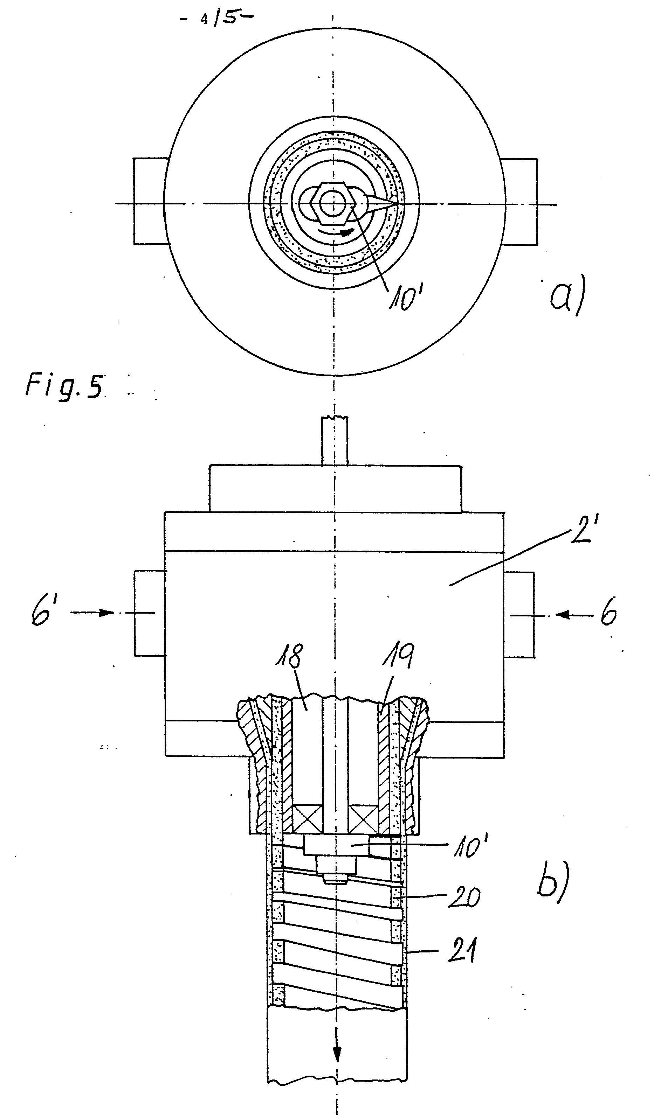

Fig. 5a  -  Eine Vorderansicht eines Koextrusionskopfes,
der in der Vorrichtung von Fig. 2  zur Herstellung von innen geschnittenen, koextrudierten Schläuchen verwendbar ist;

Fig. 5b  -  eine Draufsicht auf den Koextrusionskopf von
Fig. 5a ; und

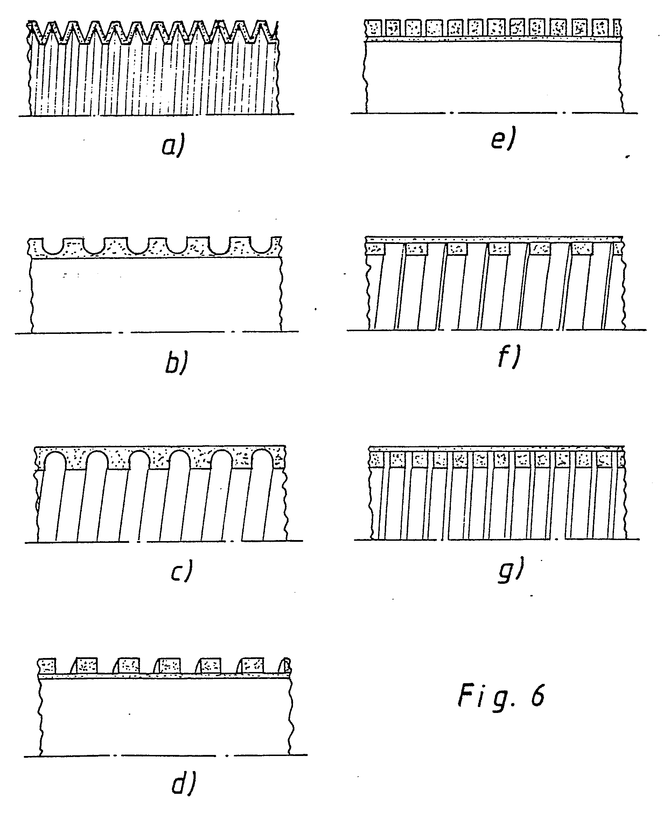

Fig. 6  -  verschiedene Ausführungsformen erfindungsgemäß
hergestellter Schläuche.

Die Vorrichtung von Fig. 1) eignet sich zur Herstellung
homoextrudierter Schläuche, beispielsweise des Schlauches
von Fig. 6a). Der Extruder 1 ist in der gezeigten Ausführungsform in einem Winkel von 90° zur Extrusionsrichtung angeordnet, es können jedoch auch beliebige
andere Winkel angewandt werden. Der Querspritzkopf 2
ist von üblicher Bauart, weist jedoch zusätzlich
Schneidelemente 3 zum spiralförmigen Einschneiden des
extrudierten Rohrs auf. Ferner sind ein Bandabzug 4 und
eine Sprühkühlung 5 vorgesehen, die auch durch ein Kühlbad ersetzt werden können. In diesem Fall erfolgt die
Schlauchextrusion vorzugsweise senkrecht oder schräg
nach unten. Ebenfalls anwendbar ist die Extrusion

0114212

senkrecht oder schräg nach oben, wobei jedoch in diesem Fall vorzugsweise mit Luftkühlung gearbeitet wird.

Die Vorrichtung von Fig. 2) eignet sich zur Herstellung koextrudierter Schläuche, beispielsweise der Schläuche von Fig. 6d) und 6f). Sie weist gegenüber der Vorrichtung von Fig. 1) einen zusätzlichen Extruder 1' auf.

Die Fig. 3a) und 3b) zeigen einen Querspritzkopf zur Herstellung von innen und außen geschnittenen, homoextrudierten Schläuchen. Plastifizierte Kunststoffmasse tritt aus dem Extruder durch die Zufuhr 6 in den Querspritzkopf 2 und wird hier zu einem vollwandigen Rohr 8 geformt. Unmittelbar am Düsenaustritt 7 wird das vollwandige Rohr mit Hilfe des rotierenden Messers 9 für den Außenschnitt und des rotierenden Messers 10 für den Innenschnitt teilweise eingeschnitten. Die Messer werden synchron über ihre Wellen 11 und ihre weiteren Antriebselemente 12 angetrieben. Die Streckung des geschnittenen Schlauches wird über die Abzugsgeschwindigkeit gesteuert.

Der in den Fig. 4a) und 4b) gezeigte Koextrusionskopf 2' eignet sich zur Herstellung koextrudierter Schläuche. Er weist eine Düse 7' auf, auf der die Antriebselemente 12' für das rotierende Messer 9' für den Außenschnitt aufsitzen. Angedeutet sind auch weitere Messer 13 und 14 für einen eventuellen Mehrfachschnitt. Die plastifizierte Masse tritt durch die Zufuhren 6 und 6' in den Koextrusionskopf 2' und wird jeweils rohrförmig in getrennten Strömen bis zum Punkt 15 geführt. Ab Punkt 15 treten beide Kunststoffströme 16 und 17 zusammen und strömen dann gemeinsam vollwandig bis zum Düsenende. Am Düsenende wird die härtere Schicht mit dem rotierenden Messer 9' geschnitten und mit Hilfe des Abzuges wird der geschnittene Schlauch gestreckt.

In den Fig. 5a) und 5b) ist ein ähnlicher Koextrusionskopf 2' dargestellt, der jedoch ein Messer 10' für den
Innenschnitt aufweist. Dieses wird im freien Kopfdurchgang 18 am Düsenkern 19 geführt. Das Messer 10' schneidet
die harte Kunststoffschicht 20 ein, ohne die weiche Schicht
21 zu durchschneiden. Die Steigung des erhaltenen Schlauches läßt sich ebenfalls über die Abzugsgeschwindigkeit
steuern.

Obwohl vorstehend der Schneidvorgang anhand rotierender
Messer erläutert wurde, versteht es sich, daß zu diesem
Zweck andere äquivalente Mittel eingesetzt werden können,
z.B. Laser-Strahlen oder Hochdruck-Flüssigkeitsstrahlen.

Die erfindungsgemäß herstellbaren flexiblen Schläuche,
die ebenfalls Gegenstand der Erfindung sind, werden im
folgenden anhand der speziellen Beispiele von Fig. 6)
näher erläutert.

Der Schlauch von Fig. 6a) ist von mittlerer Flexibilität,
hat keine Neigung zum Abknicken und weist eine wellige
Innen- und Außenfläche auf. Er wird hergestellt durch
Homoextrusion eines mittelharten Rohres mit Innen- und
Außenschnitt bei gleichzeitiger Streckung von ca. 150 %.

Der Schlauch von Fig. 6b) ist von mäßiger Flexibilität,
hat eine glatte Innenwand und ist nur für große Biegeradien geeignet. Er wird hergestellt wie der Schlauch von
Fig. 6a), jedoch erfolgt nur ein Außenschnitt und die
Streckung beträgt ca. 100 %.

Der Schlauch von Fig. 6c) ist ebenfalls von mäßiger
Flexibilität und hat eine glatte Außenwand. Er wird her-

- 11 -

gestellt wie der Schlauch von Fig. 6b), jedoch erfolgt ausschließlich ein Innenschnitt.

Der Schlauch von Fig. 6d) ist sehr flexibel und gegen äußere Krafteinwirkung sehr beständig. Seine Innenfläche ist glatt, seine Außenfläche wellig. Er wird hergestellt durch Koextrusion eines Rohres mit harter Außenschicht und weicher Innenschicht, Schneiden der harten Außenschicht und anschließende Streckung von ca. 100 %.

Der Schlauch von Fig. 6e) besitzt gute Flexibilität und radiale Steifigkeit, seine Innenfläche ist glatt, seine Außenfläche annähernd glatt. Er wird hergestellt wie der Schlauch von Fig. 6d), jedoch beträgt die Streckung nur ca. 30 %.

Der Schlauch von Fig. 6f) hat ähnliche Eigenschaften wie der Schlauch von Fig. 6d), ist jedoch außen glatt und innen wellig. Er wird hergestellt wie der Schlauch von Fig. 6d), jedoch mit harter Innenschicht, weicher Außenschicht und Innenschnitt.

Der Schlauch von Fig. 6g) hat ähnliche Eigenschaften wie der Schlauch von 6e), ist jedoch außen glatt und innen annähernd glatt. Er wird hergestellt wie der Schlauch von Fig. 6f), jedoch beträgt die Streckung nur ca. 30 %.

Erfindungsgemäß ist es auch möglich, das extrudierte oder koextrudierte Rohr entlang seines Innen- und Außenumfangs in gegenläufigen Spiralen einzuschneiden (z.B. Außenumfang in Uhrzeigersinn; Innenumfang entgegen Uhrzeigersinn), so daß an den Kreuzungsstellen der Spiralen, gegebenenfalls erst beim anschließenden Strecken des Schlauches, Perforationen entstehen. Derart perforierte Schläuche sind für Drainagezwecke geeignet.

P a t e n t a n s p r ü c h e

1. Verfahren zur Herstellung von flexiblen Kunststoffschläuchen, dadurch gekennzeichnet, daß man ein Kunststoffmaterial zu einem Rohr extrudiert, das Rohr in
noch plastischem Zustand entlang seines Innen- und/oder
Außenumfangs mit einer Schnittiefe, die geringer ist
als die Rohrdicke, spiralförmig einschneidet und den
erhaltenen flexiblen Schlauch gegebenenfalls streckt.

2. Verfahren nach Anspruch 1, dadurch gekennzeichnet, daß
man ein einziges Kunststoffmaterial extrudiert.

3. Verfahren nach Anspruch 1, dadurch gekennzeichnet, daß
man zwei oder mehr Kunststoffmaterialien von verschiedener Härte koextrudiert.

4. Verfahren nach Anspruch 3, dadurch gekennzeichnet, daß
man die jeweils härtere Materialschicht des Rohrs in
ihrer gesamten Dicke einschneidet.

5. Verfahren nach einem der Ansprüche 1 bis 4, dadurch gekennzeichnet, daß man das Rohr entlang seines Innen-
und/oder Außenumfangs mehrfach einschneidet.

6. Verfahren nach einem der Ansprüche 1 bis 4, dadurch
gekennzeichnet, daß man das Rohr entlang seines Innen-
und Außenumfangs in gegenläufigen Spiralen derart einschneidet, daß an den Schnittstellen der Spiralen
Perforationen des Schlauches entstehen.

7. Verfahren nach einem der Ansprüche 1 bis 6, dadurch
gekennzeichnet, daß man in den geschnittenen Schlauch
eine zusätzliche vorgefertigte Schlauchseele einführt.

8. Vorrichtung zur Durchführung des Verfahrens nach Anspruch 1, gekennzeichnet durch mindestens einen Extruder (1), einen Spritzkopf (2) und eine drehbare Schneideinrichtung (3) unmittelbar am Düsenaustritt (7) des Spritzkopfes (2).

9. Vorrichtung nach Anspruch 8, dadurch gekennzeichnet, daß die Schneideinrichtung (3) ein oder mehrere rotierende Messer (9, 10, 13, 14) für den Innen- und/oder Außenschnitt des extrudierten Rohrs aufweist.

10. Vorrichtung nach einem der Ansprüche 8 oder 9, dadurch gekennzeichnet, daß der Spritzkopf (2) ein Koextrusionskopf ist.

11. Vorrichtung nach einem der Ansprüche 8 bis 10, dadurch gekennzeichnet, daß sie zusätzlich eine Streckeinrichtung (4) zum Strecken des geschnittenen Schlauches aufweist.

12. Vorrichtung nach einem der Ansprüche 8 bis 11, dadurch gekennzeichnet, daß sie zusätzlich eine Kühleinrichtung (5) zum Abkühlen des geschnittenen Schlauches aufweist.

Fig.1

Fig.2

0114212

a)

b)

Fig.3

- 315-

Fig. 4

a)

b)

0114212

Fig. 5

a)

b)

18  19

6'  →        ←  6

2'

10'

20

21

a)

b)

c)

d)

e)

f)

g)

Fig. 6